# EUROPEAN PATENT APPLICATION

(11) **EP 3 349 214 A1**
(43) Date of publication of application: **18.07.2018**
(21) Application number: 17382013.5
(22) Date of filing: 13.01.2017
(51) Int. Cl.: G11B 27/36, H04N 5/00, G06F 11/07, G06T 1/20

(54) **EVALUATING PROPAGATION OF A VIDEO FEED**

(71) Applicant: Ficosa Adas, S.L.U., 08028 Barcelona (ES)
(72) Inventor: Iglesias Bronte, Victor, E08232 Viladecavalls (ES); Gómez Requena, José Antonio, 46023 Valencia (ES)
(74) Representative: ZBM Patents - Zea, Barlocci & Markvardsen

(57) **Abstract**

Method of evaluating propagation of a video feed, the video feed being propagated through at least one video processing device, the method comprising: receiving the video feed which comprises at least one frame; adding an initial timestamp to the frame; adding an additional timestamp to the frame later than adding the initial timestamp; determining a delay value related to a difference between initial and additional timestamps; verifying whether the delay value satisfies at least one predefined threshold associated to a maximum delay value, the method ensuring that critical information is actually and properly displayed and shown to the user.

## Description

The present disclosure relates to methods of evaluating propagation of a video feed, the video feed being propagated through at least one video processing device.

### BACKGROUND

More and more vehicles and avionics applications have been replacing traditional indicators in dashboards (also known as telltales) and mechanical instruments with their corresponding software implementation, often shown as images displayed on a screen. Similarly, several attempts have been made to substitute rear-view mirrors with rear-facing cameras displaying the equivalent image on a screen.

There are also video surveillance systems which have to provide real-time images/videos with a predefined frame rate which must be higher than a frequency value for security/legal requirements.

The area of integrity checks of video feeds in the technical fields of automotive and avionics is very active, probably related to the ubiquity of high-quality screens that have been replacing traditional signal lamps and mechanical instruments. The advantages of the screens are obvious: they offer simplicity from the point of manufacturing and flexibility during use that cannot be matched by the traditional mechanical counterparts.

The safety requirements for this type of applications are high: critical information indicators on the status of the vehicle or airplane are now software implemented; therefore, there is a need for methods that ensure that said critical information is actually displayed and shown to the user and to verify that they are working at all times as intended. High safety requirements may imply high "Quality Management" QM levels so they may require to take safety measures. An example of such safety measures is provided by the "Automotive Safety Integrity Level" (ASIL), which is a risk classification scheme defined by the ISO 26262. There are four ASIL levels identified by the standard: A, B, C and D. ASIL D represents the highest integrity requirements and ASIL A the lowest.

Prior art solutions like the Unique Material Identifier (UMID) comprise a special code that is used to identify audiovisual (AV) materials. It provides a unique identifier to a video frame and in an extended version it may provide time data for easy access and tracking. However, it does not provide a reliable solution for meeting the above mentioned safety requirements, for example when it comes to assure a maximum delay when processing.

In prior art solutions for automotive and avionics fields, a video check has to be performed every step in the video pipeline, with an increase of computational power, development and testing hours. By way of example, each intermediate part of a video processing device of a video pipeline in a vehicle has a high level at the Functional Safety rating (QM) so it has to meet the highest integrity requirements as above mentioned related for instance to maximum delay.

### SUMMARY

In a first aspect, a method for evaluating propagation of a video feed is provided; the video feed may be propagated through at least one video processing device. The method may comprise:
receiving the video feed which may comprise at least one frame;
adding an initial timestamp to the frame;
adding an additional timestamp to the frame later than adding the initial timestamp;
determining a delay value related to a difference between initial and additional timestamps;
verifying whether the delay value may satisfy at least one predefined threshold associated to a maximum delay value.

Throughout the present disclosure, processing is to be understood as any actions, operations and/or any series thereof that may be performed on at least one pixel of an input video frame; those actions or operations conducing to vary or maintain attributes of the at least one pixel of an output video frame. The processing may be realised by at least one video processing device and throughout at least one processing step.

The present method ensures that critical information may be certainly displayed and shown to the user through screens. The method may also report that a video pipeline comprising any video processing device works properly according to a predefined condition.

Unlike the prior art devices, the present method does not need to perform a relative high video timing consumption in every step of a video pipeline, just a comparison between an initial timestamp and an additional timestamp of the overall processing. It does not require a great amount of computational power, development and testing hours for implementing each part of a video processing device comprised in a video pipeline, so it allows an easier implementation and less development costs.

The method may also simplify any functional safety level of intermediate processing parts of a video processing device used in a video transmission pipeline, when the overall processing device may be requested to have a relative great safety/security requirement level such as a maximum delay allowed.

In some examples of the method the initial and the additional timestamps may be added upon processing the frame, so a fault working condition of any frame processing may be reported.

In some other examples of the method the initial timestamp may be added upon starting processing the frame and the additional timestamp may be added upon finishing processing the frame. This feature allows to accurately evaluating the time duration of the propagation of the video feed during the full processing thereof, particularly focused on the processing step of at least one frame.

In another aspect, a computer program is disclosed. The computer program may comprise program instructions for causing a computing system to perform a method of evaluating propagation of a video feed according to some examples disclosed herein.

The computer program may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Furthermore, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or another device or means.

Alternatively, the carrier may be an integrated circuit in which the computer program is embedded, the integrated circuit being adapted for performing, or for use in the performance of, the relevant methods.

In yet another aspect, a computing system is disclosed. The system may comprise a memory and a processor. The memory may store computer program instructions executable by the processor. Said instructions may comprise functionality to execute a method for evaluating propagation of a video feed according to some examples disclosed herein.

In another aspect, it is disclosed a system which may comprise means for receiving a video feed which comprises at least one frame; means for adding an initial timestamp to the frame; means for adding an additional timestamp to the frame later than adding the initial timestamp; means for determining a delay value related to a difference between initial and additional timestamps; means for verifying whether the delay value satisfies at least one predefined threshold associated to a maximum delay value.

### BRIEF DESCRIPTION OF THE DRAWINGS

Non-limiting examples of the present disclosure will be described in the following, with reference to the appended drawings, in which:
Figure 1 is a flow chart of a method of evaluating propagation of a video feed according to an example;
Figure 2 schematically illustrates a video path system according to an example; and
Figure 3 schematically illustrates a video frame according to an example.

### DETAILED DESCRIPTION OF EXAMPLES

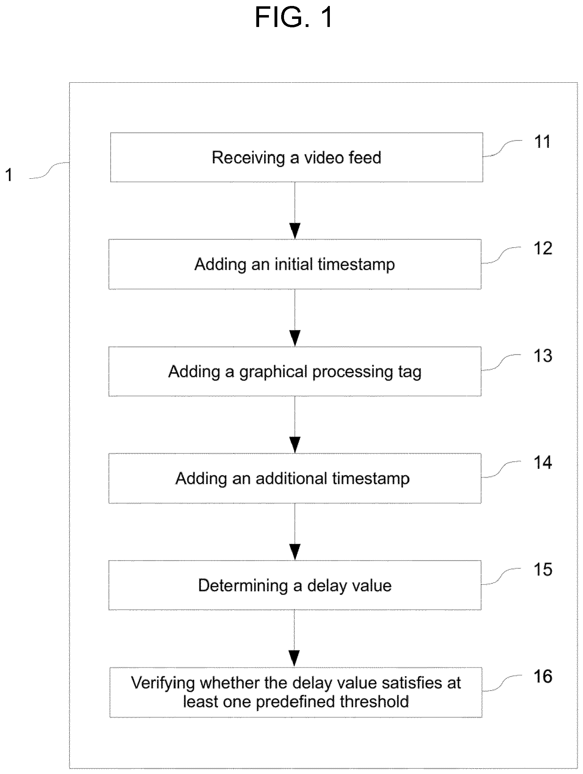

Figure 1 is a flowchart of a method 1 for evaluating propagation of a video feed according to a possible example. Although figure 1 shows a specific sequence, it should be understood that other sequences may be followed not deviating from the scope of the present disclosure. The video feed may be propagated through at least one video processing device 103 and that video processing device 103 may be provided in a video transmission pipeline as will be disclosed later on.

According to an example, the method 1 may comprise:
receiving the video feed 11 which may comprise at least one frame 200. That video feed may be obtained for instance by a camera 101 with an interface 102 or the like as will be described later on;
adding an initial timestamp 12 to the frame 200;
adding an additional timestamp 14 to the frame 200 later than adding the initial timestamp 12. This additional timestamp 14 is added once the frame 200 is provided with the initial timestamp 12. Therefore, at least two timestamps 12, 14 are added to the frame 200;
determining a delay value 15 related to a difference between initial and additional timestamps 204, 206. Initial and additional timestamps 204, 206 may be embedded at different times from each other, so a delay value may be determined by comparing both timestamps 204, 206;
verifying whether the delay value satisfies at least one predefined threshold associated to a maximum delay value 16. The maximum delay value may be provided on the basis of predefined safety and/or safety requirements. For instance the maximum delay value may be related to a predefined risk classification scheme: the higher the level risk may be, the lower the maximum delay value may be.

In some examples, the maximum delay value may be changed depending on particular safety and/or security requirements, e.g. a predefined frame rate. This may provide even more flexibility to the implementation of the method 1.

According to some examples, the method 1 may further comprise adding a graphical processing tag 13 to the frame 200. Although the numerical reference "13" has been positioned between references "12" and "14", adding the graphical processing tag 205 may be performed in any other position within the sequence. By way of illustration, adding a graphical processing tag 13 may be performed at the same time as adding an initial timestamp 12 or even at the same time as an additional timestamp 14. In some examples, the graphical processing tag 205 may comprise any parameter (data) related to the processing of the frame and which may be useful in any downstream step and/or may be retrieved by any part of the video pipeline, for instance a later checking.

In some examples, the method 1 may further comprise adding an identifier 203 to the frame 200. This identifier 203 may comprise information regarding identification of the frame 200 and the identifier 203 may remain unchanged throughout any processing of the frame 200.

According to some examples, the initial and additional timestamps 204, 206 may be added upon processing the frame 200. According to some examples, the initial timestamp 204 may be added upon starting processing the frame 200 and the additional timestamp 206 may be added upon finishing processing the frame 200.

In some implementations, the initial and additional timestamps 204, 206 may remain unchanged throughout any processing of the frame 200.

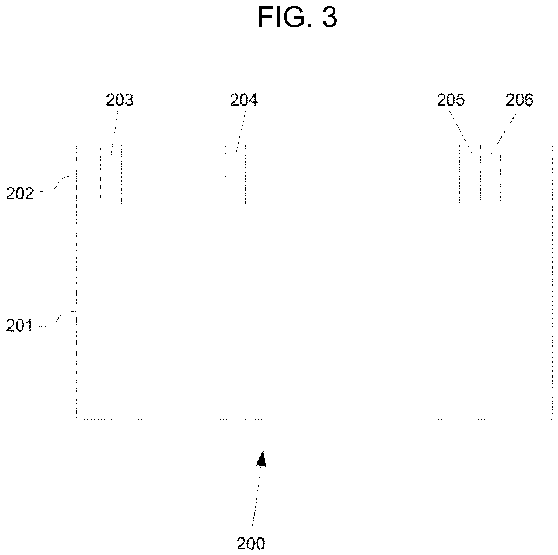

In some examples, as that video frame 200 schematically illustrated in figure 3, the initial and additional timestamps 204, 206 may be provided in a predefined non-viewable area 202 of the frame 200. In some examples, the initial and additional timestamps 204, 206 may be provided in different positions from each other in the non-viewable area 202.

In some implementations, the frame 200 may comprise a viewable area 201 where any image may be shown to the user and the non-viewable area 202 which may be not be accessible (visible) to the final user. The non-viewable area 202 may be arranged as a row for data.

In some implementations, the method 1 may further comprise verifying the integrity of the initial and additional timestamps and/or the identifier. If it is not positively verified that integrity an error message may be triggered and/or any part of the video pipeline may be switched off.

According to some examples, the video fed may comprise a plurality of frames 200 wherein the initial and additional timestamps 204, 206 may be added to each frame 200.

In some examples, the method 1 may further comprise triggering a warning signal and/or an error message if the delay value does not satisfy the predefined threshold. This message or signal may be sent to a user of the video pipeline who may be warned about any malfunction, for instance if a predefined frame rate is not met.

According to some implementations, the method 1 may further comprise switching off at least one part of the video transmission pipeline if the delay value does not satisfy the predefined threshold. This action may be performed automatically and the user may not be required to take any further action.

In some implementations, the method 1 may further comprise displaying the frame. Frame may be displayed regardless of whether the delay value satisfies (or does not) the predefined threshold associated to the maximum delay value.

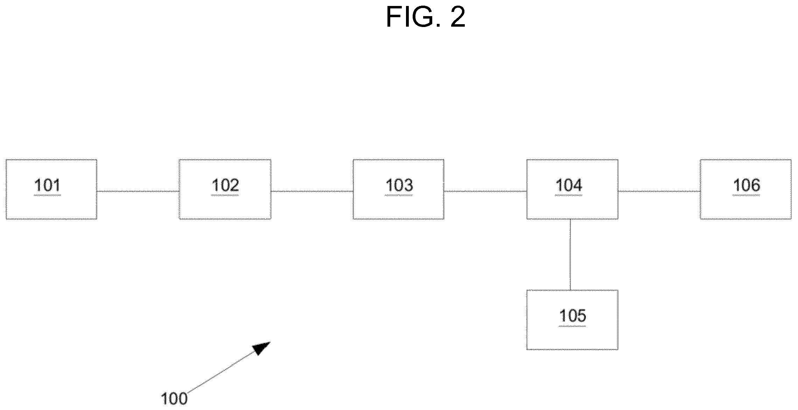

Figure 2 schematically illustrates a video path system 100 according to some examples. The video path system 100 may comprise a video transmission pipeline followed by the frame 200 from a camera 101 (with an interface 102) to a display 106.

In some examples, the video path system 100 may comprise the camera 101, i.e. an electronic unit that may deliver video information; the camera 101 may be substituted by a generic image generator. The video path system 100 may also comprise a camera interface 102 which may be a main interface of the camera 101 with the video processing device 103. The video processing device 103 may be a video/graphic processor that may acquire or generate the frame 200 (as an input), process at least one pixel of the frame 200, and drive a video output. As above stated the processing may allow varying the attributes of the pixel or keeping them unchanged. The video path system 100 may also comprise a display control unit 104 and a display 106. A main processor 105 may also be provided on the video path system 100, that main processor 105 may be implemented as a general-purpose processor that may process frame information, evaluate it and take a decision depending on predefined safety requirements.

In some examples, the main processor 105 and the video processing device 103 may be embodied as a single device, for example a unique processing device configured to perform the same functions as the main processor 105 and the video processing device 103.

In some examples, the video processing device 103 and the camera interface 102 may be embodied as a single device.

In some examples, the video processing device 103 and the display control unit 104 may be embodied as a single device, for example a unique processing device configured to perform the same functions as the display control unit 104 and the video processing device 103.

In some examples, the main processor 105 and the display control unit 104 may be embodied as a single device, for example a unique processing device configured to perform the same functions as the main processor 105 and the display control unit 104.

As mentioned above, the video processing device 103 may be provided in a video transmission pipeline, meeting functional safety level of intermediate processing devices when requested to have a relative greater safety requirement level as maximum delay allowed. The video processing device 103 may comprise some parts and some processing steps may be carried out therein. The video transmission pipeline may be provided for instance at a vehicle, a security system or any other implementation where a predefined frame rate has to be met.

According to some examples, all or some parts of the video path system 100 may be provided as an electronic device (not shown). The electronic device may be implemented on a vehicle such as an automobile, motorbike, lorry, train, aircraft, etc.

According to some examples, the video feed 11 may be sent through a communication network, e. g. a wireless or wired communication network. All the parts of the video path system 100 may be in data communication with each other.

A possible implementation of the method as disclosed herein may comprise the video processing device 103 receiving the video feed 11. An image/s may be obtained through the camera 101 or the like, then the image/s may pass through the camera interface 102 and entering the video processing device 103. The image may be a video frame 200. The image may be processed through the video processing device 103 in order to produce a video output. An initial timestamp 204 may be added to the frame 200 upon starting the processing and an additional timestamp 206 upon finishing the processing. The identifier 203 may be added to the frame 200 during processing or even before and the graphical processing tag 205 may be added during processing.

The frame/s 200 with the timestamps 204, 206 (and even the identifier 203 and the graphical processing tag 205) may be received by the display control unit 104. The display control unit 104 may extract data comprising the timestamps 204, 206 (and even the identifier 203 and the graphical processing tag 205) and said data may be sent to the main processor 105. At the main processor 105 may be determined a delay value related to a difference between initial and additional timestamps 204, 206 and it may be verified whether the delay value satisfies at least one predefined threshold associated to the maximum delay value. This maximum delay value may be a threshold condition to be met by the delay value and when it is met, i.e. delay value lower than maximum delay value, the video may be properly played. Otherwise, a warning signal may be triggered and/or an error message may be sent to the user reporting on any malfunction. Furthermore, any part of the video pipeline (e.g. the video processing device 103 or the display 106) may be switched off if the delay value does not satisfy the predefined threshold.

In some examples, the video frame may be displayed even though the delay value does not satisfy the predefined threshold.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. A method of evaluating propagation of a video feed, the video feed being propagated through at least one video processing device, the method comprising:
receiving the video feed which comprises at least one frame;
adding an initial timestamp to the frame;
adding an additional timestamp to the frame later than adding the initial timestamp;
determining a delay value related to a difference between initial and additional timestamps;
verifying whether the delay value satisfies at least one predefined threshold associated to a maximum delay value.

2. The method according to claim 1, wherein the initial and additional timestamps are added upon processing the frame.

3. The method according to claim 2, wherein the initial timestamp is added upon starting processing the frame and the additional timestamp is added upon finishing processing the frame.

4. The method according to any of claims 1 to 3, wherein initial and additional timestamps are provided in a predefined non-viewable area of the frame.

5. The method according to claim 4, wherein initial and additional timestamps are provided in different positions from each other in the non-viewable area.

6. The method according to any of claims 1 to 5, further comprising:
adding a graphical processing tag to the frame, the graphical processing tag comprising a parameter related to the processing of the frame.

7. The method according to any of claims 1 to 6, further comprising:
triggering a warning signal and/or an error message if the delay value does not satisfy the predefined threshold.

8. The method according to any of claims 1 to 7, wherein the video processing device is provided in a video transmission pipeline.

9. The method according to claim 8, further comprising:
switching off at least one part of the video transmission pipeline if the delay value does not satisfy the predefined threshold.

10. The method according to any of claims 1 to 9, further comprising:
displaying the frame.

11. A computer program comprising program instructions for causing a computing system to perform a method according to any of claims 1 to 10 of evaluating propagation of a video feed.

12. A computer program according to claim 11, embodied on a storage medium.

13. A computer program according to any of claims 11 or 12, carried on a carrier signal.

14. A system comprising:
means for receiving a video feed which comprises at least one frame;
means for adding an initial timestamp to the frame;
means for adding an additional timestamp to the frame later than adding the initial timestamp;
means for determining a delay value related to a difference between initial and additional timestamps;
means for verifying whether the delay value satisfies at least one predefined threshold associated to a maximum delay value.

15. A computing system comprising a memory and a processor, embodying instructions stored in the memory and executable by the processor, the instructions comprising functionality to execute a method according to any of claims 1 to 10 of evaluating propagation of a video feed.
